# EUROPEAN PATENT APPLICATION

(11) **EP 4 650 950 A2**
(43) Date of publication of application: **19.11.2025**
(21) Application number: 25200218.3
(22) Date of filing: 22.06.2022
(51) Int. Cl.: G06F 8/71

(54) **OTA UPGRADE METHOD AND DEVICE, AND COMPUTER-READABLE STORAGE MEDIUM**

(30) Priority: 23.06.2021 CN 202110699630
(62) Divisional of application: 22827619.2
(71) Applicant: Shenzhen Yinwang Intelligent Technologies Co., Ltd., Shenzhen, Guangdong 518110 (CN)
(72) Inventor: XU, Youming, Shenzhen, Guangdong, 518110 (CN)
(74) Representative: Maiwald GmbH

(57) **Abstract**

Embodiments of this application disclose an OTA upgrade method and apparatus, and a computer-readable storage medium. The OTA upgrade method includes: A terminal sends software information of a control unit to an OTA server, where the software information includes information about a current software version of the control unit and indication information, and the indication information indicates whether there is a corresponding rollback package for the current software version of the control unit; the terminal receives upgrade information sent by the OTA server, where if there is no corresponding rollback package for the current software version of the control unit, the upgrade information includes software installation package download information of the current version and software installation package download information of a target version that are of the control unit; or if there is the corresponding rollback package for the current software version of the control unit, the upgrade information is software installation package download information of a target version; and the terminal performs a first operation on the control unit based on the upgrade information. According to embodiments of this application, a rollback processing problem caused by OTA upgrade failure can be better resolved.

## Description

### TECHNICAL FIELD

This application relates to the fields of the internet of vehicles and communication technologies, and specifically, to an OTA upgrade method and apparatus, and a vehicle.

### BACKGROUND

With continuous development of computer technologies, network technologies, and the like, various hardware and software (applications) are usually deployed in current terminals. For example, an intelligent cockpit, a sensing system, and an autonomous driving system are configured in a vehicle, and a vehicle-mounted operating system, a navigation application, and an audio/video playing application are also installed in the vehicle. Although the hardware and software enrich functions of the terminal, the hardware and software are more prone to vulnerabilities, or the hardware and software need to be replaced with more advanced versions, or the like. Therefore, the hardware and software (applications) of the terminal need to be upgraded.

An over-the-air (over-the-air, OTA) technology is a technology for downloading data through a wireless network, and the technology is widely used for upgrading devices such as a vehicle, a television, a mobile phone, a tablet computer, and a set-top box. In the OTA technology, automatic upgrade is mainly performed by downloading an OTA upgrade package (or an OTA upgrade package can be copied to an SD card for upgrade). OTA upgrade is fast and has little impact on data. Therefore, the OTA upgrade becomes a main manner of upgrading the functions of the terminal. For example, for a vehicle, an original equipment manufacturer (Original Equipment Manufacturer, OEM) upgrades related hardware or software of the vehicle by using the OTA technology. This helps the manufacturer reduce recall costs, quickly respond to a requirement, and improve user experience.

During the OTA upgrade, the upgrade may fail. To restore a version status before the upgrade when the upgrade fails, the terminal needs to be capable of performing a rollback operation. For example, in an automotive open system architecture (Automotive Open System Architecture, AutoSar) standard, an A/B partition upgrade and backup solution may be used. Some manufacturers also use this solution. However, use of the A/B partition upgrade and backup solution leads to higher costs of an electronic control unit (Electronic Control Unit, ECU), and many ECUs do not have a capability of A/B partition upgrade and backup. How to better resolve a rollback processing problem caused by OTA upgrade failure is an urgent technical problem to be resolved by a person skilled in the art.

### SUMMARY

This application provides an OTA upgrade method and apparatus, and a vehicle, to better resolve a rollback processing problem caused by OTA upgrade failure.

According to a first aspect, this application provides an OTA upgrade method. The method includes:
A terminal sends software information of a control unit to an OTA server, where the software information includes information about a current software version of the control unit and indication information, and the indication information indicates whether there is a corresponding rollback package for the current software version of the control unit;
the terminal receives upgrade information sent by the OTA server, where if there is no corresponding rollback package for the current software version of the control unit, the upgrade information includes software installation package download information of the current version and software installation package download information of a target version that are of the control unit; or if there is the corresponding rollback package for the current software version of the control unit, the upgrade information is software installation package download information of a target version; and
the terminal performs a first operation on the control unit based on the upgrade information.

In an embodiment of this application, when the terminal interacts with the OTA server, regardless of whether a to-be-upgraded control unit supports A/B partition upgrade and backup, the indication information indicating whether there is the corresponding rollback package for the current software version of the control unit is sent to the OTA server, so that the OTA server identifies whether to deliver installation package download information used for a rollback, to implement on-demand delivery of the rollback package and effectively reduce traffic consumption.

In a possible implementation, the control unit includes a control unit that supports A/B partition upgrade and backup or a control unit that does not support A/B partition upgrade and backup.

In an embodiment of this application, when both the control unit that supports the A/B partition upgrade and backup and the control unit that does not support the A/B partition upgrade and backup exist on the terminal, an upgrade rollback procedure can be simplified and unified, and the control unit that does not support the A/B partition upgrade and backup does not need to be reconstructed. Especially in a scenario in which the terminal (for example, a vehicle) replaces a component, regardless of whether the newly replaced component supports the A/B partition upgrade and backup, a rollback capability in an OTA upgrade process can be automatically compatible, so that costs are reduced.

In a possible implementation, if the control unit supports A/B partition upgrade and backup, the indication information indicates that there is the corresponding rollback package for the current software version of the control unit; or
when the control unit does not support A/B partition upgrade and backup, if the terminal stores a backup installation package of the current software version of the control unit, the indication information indicates that there is the corresponding rollback package for the current software version of the control unit; or when the control unit does not support A/B partition upgrade and backup, if the terminal does not store a backup installation package of the current software version of the control unit, the indication information indicates that there is no corresponding rollback package for the current software version of the control unit.

When it is determined that the control unit supports the A/B partition upgrade and backup, the indication information indicating that there is the corresponding rollback package is directly generated. Alternatively, when it is determined that the control unit does not support the A/B partition upgrade and backup, whether the backup installation package of the current software version of the control unit is stored is specifically detected. In this way, the upgrade rollback procedure can be simplified and unified, and a rollback processing problem caused by OTA upgrade failure can be better resolved.

In another possible implementation, that the terminal performs a first operation on the control unit based on the upgrade information includes:
If the control unit supports the A/B partition upgrade and backup, the terminal downloads a software installation package of the target version based on the software installation package download information of the target version of the control unit, and performs upgrade installation on the control unit in a backup partition based on the software installation package of the target version.

In an embodiment of this application, if the control unit supports the A/B partition upgrade and backup, after the software installation package of the target version is downloaded, the capability of A/B partition upgrade and backup may be used to perform upgrade installation on the control unit in the backup partition based on the software installation package of the target version, to implement OTA upgrade or rollback. If upgrade succeeds, the downloaded software installation package of the target version of the control unit may be deleted. This saves storage space.

In another possible implementation, that the terminal performs a first operation on the control unit based on the upgrade information includes:
If the control unit does not support the A/B partition upgrade and backup, when there is the corresponding rollback package for the current software version of the control unit, the terminal downloads a software installation package of the target version of the control unit based on the software installation package download information of the target version, and performs upgrade installation on the control unit based on the software installation package of the target version; or
when there is no corresponding rollback package for the current software version of the control unit, the terminal downloads a software installation package of the target version of the control unit based on the software installation package download information of the target version, and downloads a software installation package of the current version of the control unit based on the software installation package download information of the current version of the control unit; and performs upgrade installation on the control unit based on the software installation package of the target version.

In an embodiment of this application, if the control unit does not support the A/B partition upgrade and backup, after the software installation package of the target version is downloaded, and the software installation package of the current version of the control unit is downloaded when there is no corresponding rollback package, the terminal performs upgrade based on the software installation package of the target version; and performs rollback processing based on the software installation package of the current version of the control unit. This better resolves the rollback processing problem caused by OTA upgrade failure.

In another possible implementation, the OTA upgrade method in this application further includes:
If upgrade succeeds, the terminal deletes the software installation package of the current version of the control unit, and stores the software installation package of the target version of the control unit as a rollback package.

In an embodiment of this application, if the control unit does not support the A/B partition upgrade and backup, after the upgrade succeeds, the software installation package of the current version of the control unit is deleted, and the software installation package of the target version of the control unit is stored as a new rollback package. This better resolves the rollback processing problem caused by OTA upgrade failure.

In another possible implementation, if the control unit supports the A/B partition upgrade and backup, in a process of the performing upgrade installation on the control unit in a backup partition based on the software installation package of the target version, upgrade fails, and the method further includes:
The terminal restores the partition in which the upgrade fails to a mirror backup partition.

In an embodiment of this application, if the control unit supports the A/B partition upgrade and backup, after the upgrade fails, the partition in which the upgrade fails is restored to the mirror backup partition. To be specific, data in a partition in use is mirrored and backed up to the partition in which the upgrade fails, and the partition in current use continues to be used. In this way, a rollback is implemented. Further, the downloaded software installation package of the target version of the control unit may be deleted. This saves storage space.

In another possible implementation, if the control unit does not support the A/B partition upgrade and backup, in a process of the performing upgrade installation on the control unit based on the software installation package of the target version, upgrade fails, and the method further includes:
The terminal performs a rollback operation based on the software installation package of the current version of the control unit, and deletes the software installation package of the target version.

In an embodiment of this application, if the control unit does not support the A/B partition upgrade and backup, after the upgrade fails, the terminal may perform the rollback operation based on the stored software installation package of the current version of the control unit, to resolve the rollback processing problem caused by OTA upgrade failure.

In another possible implementation, before the performing upgrade based on the software installation package of the target version of the control unit, the method further includes: The terminal receives a first key sent by a first server; and decrypts the software installation package of the target version of the control unit based on the first key. The software installation package of the target version of the control unit is generated after the first server encrypts upgrade data of the control unit based on a second key. The first key is a decryption key corresponding to the second key.

In an embodiment of this application, the first server may be a component supplier of the terminal, and the software installation package of the target version of the control unit is encrypted by the first server. This can prevent a core technology of the component supplier from being leaked or related data from being obtained by the OTA server, and prevent an attacker from tampering with the upgrade data, so that security of OTA upgrade is improved.

In another possible implementation, that the terminal receives a first key sent by a first server includes:
The terminal establishes a secure channel with the first server; and
the terminal receives, through the secure channel, the first key sent by the first server.

The secure channel may be a transmission channel based on a secure sockets layer (Secure Sockets Layer, SSL) protocol or a transport layer security (Transport Layer Security, TLS) protocol, and is used for secure transmission of data. Because the secure channel is a secure and trusted channel, the first server transmits the first key to the terminal through the secure channel. This can ensure security of the first key.

According to a second aspect, this application provides an over-the-air OTA upgrade method. The method includes:
An OTA server receives software information that is of a control unit and that is sent by a terminal, where the software information includes information about a current software version of the control unit and indication information, and the indication information indicates whether there is a corresponding rollback package for the current software version of the control unit; and
the OTA server sends upgrade information to the terminal based on the software information, where if there is no corresponding rollback package for the current software version of the control unit, the upgrade information includes software installation package download information of the current version and software installation package download information of a target version that are of the control unit; or if there is the corresponding rollback package for the current software version of the control unit, the upgrade information is software installation package download information of a target version of the control unit.

In a possible implementation, the control unit includes a control unit that supports A/B partition upgrade and backup or a control unit that does not support A/B partition upgrade and backup.

In an embodiment of this application, when the terminal interacts with the OTA server, regardless of whether a to-be-upgraded control unit supports A/B partition upgrade and backup, the indication information indicating whether there is the corresponding rollback package for the current software version of the control unit is sent to the OTA server, so that the OTA server identifies whether to deliver installation package download information used for a rollback, to implement on-demand delivery of the rollback package and effectively reduce traffic consumption. When both the control unit that supports the A/B partition upgrade and backup and the control unit that does not support the A/B partition upgrade and backup exist on the terminal, an upgrade rollback procedure can be simplified and unified, and the control unit that does not support the A/B partition upgrade and backup does not need to be reconstructed. Especially in a scenario in which the terminal (for example, a vehicle) replaces a component, regardless of whether the newly replaced component supports the A/B partition upgrade and backup, a rollback capability in an OTA upgrade process can be automatically compatible, so that costs are reduced.

According to a third aspect, an embodiment of this application provides an over-the-air OTA upgrade apparatus. The apparatus includes:
a first sending unit, configured to send software information of a control unit to an OTA server, where the software information includes information about a current software version of the control unit and indication information, and the indication information indicates whether there is a corresponding rollback package for the current software version of the control unit;
a first receiving unit, configured to receive upgrade information sent by the OTA server, where if there is no corresponding rollback package for the current software version of the control unit, the upgrade information includes software installation package download information of the current version and software installation package download information of a target version that are of the control unit; or if there is the corresponding rollback package for the current software version of the control unit, the upgrade information is software installation package download information of a target version; and
an execution unit, configured to perform a first operation on the control unit based on the upgrade information.

In a possible implementation, the control unit includes a control unit that supports A/B partition upgrade and backup or a control unit that does not support A/B partition upgrade and backup.

In a possible implementation, if the control unit supports A/B partition upgrade and backup, the indication information indicates that there is the corresponding rollback package for the current software version of the control unit; or
when the control unit does not support A/B partition upgrade and backup, if the apparatus stores a backup installation package of the current software version of the control unit, the indication information indicates that there is the corresponding rollback package for the current software version of the control unit; or when the control unit does not support A/B partition upgrade and backup, if the apparatus does not store a backup installation package of the current software version of the control unit, the indication information indicates that there is no corresponding rollback package for the current software version of the control unit.

In a possible implementation, the execution unit includes:
a first download and upgrade unit, configured to: if the control unit does not support the A/B partition upgrade and backup, when there is the corresponding rollback package for the current software version of the control unit, download a software installation package of the target version of the control unit based on the software installation package download information of the target version, and perform upgrade installation on the control unit based on the software installation package of the target version; or
a second download and upgrade unit, configured to: when there is no corresponding rollback package for the current software version of the control unit, download a software installation package of the target version of the control unit based on the software installation package download information of the target version, and download a software installation package of the current version of the control unit based on the software installation package download information of the current version of the control unit; and perform upgrade installation on the control unit based on the software installation package of the target version.

In a possible implementation, the apparatus further includes:
a restoration unit, configured to: when upgrade fails in a process of the performing upgrade installation on the control unit in a backup partition based on the software installation package of the target version, restore the partition in which the upgrade fails to a mirror backup partition.

In a possible implementation, the apparatus further includes:
a rollback unit, configured to: when upgrade fails in a process of the performing upgrade installation on the control unit in a backup partition based on the software installation package of the target version, perform a rollback operation based on the software installation package of the current version of the control unit, and delete the software installation package of the target version.

According to a fourth aspect, an embodiment of this application provides an over-the-air OTA server. The OTA server includes:
a second receiving unit, configured to receive software information that is of a control unit and that is sent by a terminal, where the software information includes information about a current software version of the control unit and indication information, and the indication information indicates whether there is a corresponding rollback package for the current software version of the control unit; and
a second sending unit, configured to send upgrade information to the terminal based on the software information, where if there is no corresponding rollback package for the current software version of the control unit, the upgrade information includes software installation package download information of the current version and software installation package download information of a target version that are of the control unit; or if there is the corresponding rollback package for the current software version of the control unit, the upgrade information is software installation package download information of a target version of the control unit.

According to a fifth aspect, this application provides a terminal. The terminal includes a processor, and the processor is configured to support the terminal in performing a corresponding function in the OTA upgrade method according to any one of the first aspect or the possible implementations of the first aspect. The terminal may further include a memory. The memory is coupled to the processor, and stores program instructions and data that are necessary for the terminal. The terminal may further include a communication interface used for communication between the terminal and another device or a communication network.

According to a sixth aspect, this application provides an OTA server. The server includes a processor, and the processor is configured to support the server in performing a corresponding function in the OTA upgrade method according to any one of the second aspect or the possible implementations of the second aspect. The server may further include a memory. The memory is coupled to the processor, and stores program instructions and data that are necessary for the server. The server may further include a communication interface used for communication between the server and another device or a communication network.

It should be noted that the program instructions and the data in the memory in this application may be pre-stored, or may be downloaded from the Internet and then stored when the device is used. Sources of the program instructions and the data in the memory are not specifically limited in this application. The coupling in embodiments of this application may be an indirect coupling or connection between apparatuses, units, or modules, may be in an electrical, a mechanical, or another form, and is used for information exchange between the apparatuses, the units, or the modules.

According to a seventh aspect, this application provides a computer-readable storage medium. The computer-readable storage medium stores a computer program. The computer program is executed by a processor to implement the method according to either the first aspect or the second aspect.

According to an eighth aspect, this application provides a computer program product. When the computer program product is read and executed by a processor, the method according to either the first aspect or the second aspect is performed.

The solutions provided in the second aspect to the eighth aspect are used for implementing or collaboratively implementing the method provided in the first aspect, and therefore can achieve beneficial effects the same as or corresponding to those in the first aspect. Details are not described herein again.

### BRIEF DESCRIPTION OF DRAWINGS

The following describes accompanying drawings that need to be used in embodiments of this application.
FIG. 1a is a diagram of a system architecture for OTA upgrade according to an embodiment of this application;
FIG. 1b is a diagram of a system architecture for OTA upgrade according to another embodiment of this application;
FIG. 1c is a functional block diagram of a vehicle 10 according to an embodiment of this application;
FIG. 2 is a schematic flowchart of an OTA upgrade method according to an embodiment of this application;
FIG. 3 is a schematic diagram of a structure of an OTA upgrade apparatus according to an embodiment of this application;
FIG. 4 is a schematic diagram of a structure of an OTA server according to an embodiment of this application; and
FIG. 5 is a schematic diagram of a structure of a device according to an embodiment of this application.

### DESCRIPTION OF EMBODIMENTS

The following describes embodiments of this application with reference to accompanying drawings in embodiments of this application.

In the specification, claims, and accompanying drawings of this application, terms "first", "second", and the like are intended to distinguish between different objects but do not indicate a particular order. In addition, the terms "include" and "have" and any other variants thereof are intended to cover a non-exclusive inclusion. For example, a process, a method, a system, a product, or a device that includes a series of steps or units is not limited to the listed steps or units, but optionally further includes unlisted steps or units, or optionally further includes other inherent steps or units of the process, the method, the product, or the device.

An "embodiment" mentioned in this specification means that a particular feature, structure, or characteristic described with reference to this embodiment may be included in at least one embodiment of this application. The phrase shown in various locations in the specification may neither necessarily mean a same embodiment, nor mean an independent or optional embodiment exclusive from another embodiment. It is explicitly and implicitly understood by a person skilled in the art that embodiments described in the specification may be combined with another embodiment.

The terms "component", "module", and "system" and the like used in this specification indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As illustrated by using figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, in a distributed system, and/or across a network like the Internet interacting with another system by using a signal).

Some terms in this application are first described, to help a person skilled in the art have a better understanding.
(1). An over-the-air (over-the-air, OTA) technology is a technology for performing remote firmware or software upgrade through an air interface of mobile communication. The OTA technology is widely used in network upgrade of devices such as a smart television, a mobile phone, a tablet computer, and a set-top box. With development of intelligent connected vehicles, OTA online upgrade becomes an important function of an automobile or a vehicle.
(2). A telematics box (Telematics box), also referred to as a T-BOX (T-BOX), is a compound of telecommunications (Telecommunications) and informatics (Informatics). The T-BOX may be literally defined as a service system that provides information by using a computer system built in a transportation tool like an automobile, an aircraft, a vessel, or a train, a wireless communication technology, a satellite navigation apparatus, or an Internet technology for exchanging information such as a text or a voice. In brief, a vehicle is connected to the Internet through a wireless network, to provide a vehicle owner with various information necessary for driving and living.
(3). An electronic control unit (Electronic Control Unit, ECU) is a vehicle-specific microcomputer controller from a perspective of usage. Like a common computer, the electronic control unit includes large-scale integrated circuits such as a microprocessor (CPU), a memory (a ROM or a RAM), an input/output (I/O) interface, an analog/digital (A/D) converter, a shaper, and a driver. A vehicle control unit in embodiments of this application is the electronic control unit.
(4). A vehicle control unit (Vehicle control unit, VCU) may be also referred to as a vehicle control unit VCU of an electric vehicle, which is an assembly controller of a power system of the electric vehicle. The VCU is responsible for coordinating operations of components such as an engine, a drive motor, a gearbox, and a power battery, and has functions of improving power performance, security performance, economical efficiency, and the like of a vehicle. The VCU is a core component of a vehicle control system of an electric vehicle, and is a core controller configured to: control a motor of the electric vehicle in starting, operating, moving forward/backward, speed changing, and stopping, and control other electronic components of the electric vehicle. As a core component of a control system of a pure electric vehicle, the VCU is responsible for tasks such as data exchange, security management, driver intension interpretation, and power stream management. The VCU collects a signal of a motor control system, a signal of an accelerator pedal, a signal of a brake pedal, and a signal of another component, determines a driving intension of a driver after performing comprehensive analysis and makes a response, and monitors actions of controllers of lower-layer components. The VCU plays a key role in functions such as normal vehicle driving, battery energy braking and regeneration, network management, fault diagnosis and processing, and vehicle status monitoring.
(5). A human machine interface (Human Machine Interface, HMI), also referred to as a user interface, is a medium for interaction and information exchange between a system and a user, and implements conversion between an internal form of information and a form acceptable to human beings.
(6). A controller area network (Controller Area Network, CAN) bus is one of the most widely used field buses in the world. High reliability and a strong error detection capability of the CAN bus attract much attention, and therefore the CAN bus is widely used in a vehicle computer control system and an industry environment with a harsh ambient temperature, strong electromagnetic radiation, and intense vibration. The CAN bus is a widely used field bus, and has a great application prospect in the fields such as industrial measurement and control and industrial automation. A CAN is a serial communication bus network. The CAN bus has advantages of reliability, real time, and flexibility in data communication. To ensure a transparent design and flexible execution, a structure of the CAN bus is divided into a physical layer and a data link layer (including a logical link control LLC sub-layer and a media access control MAC sub-layer) according to an ISO/OSI standard model.

To better understand an OTA upgrade method provided in embodiments of this application, the following first describes a system architecture and a service scenario in embodiments of this application. It should be noted that the system architecture and the service scenario described in this application are intended to describe the technical solutions in this application more clearly, and do not constitute a limitation on the technical solutions provided in this application. A person of ordinary skill in the art may learn that with evolution of the system architecture and emergence of a new service scenario, the technical solutions provided in this application are also applicable to similar technical problems.

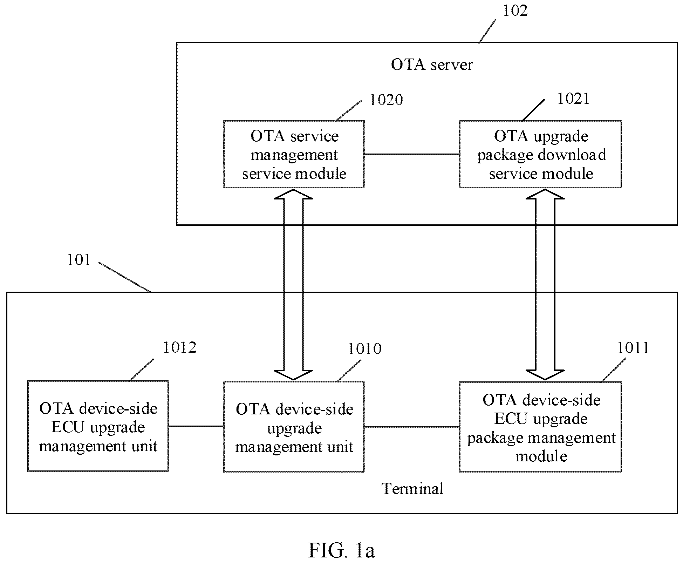

FIG. 1a is a diagram of a system architecture for OTA upgrade according to an embodiment of this application. The system architecture may include a terminal 101 and an OTA server 102.

The OTA server 102 is a server that exchanges information with the terminal 101 in an OTA upgrade process. The OTA server 102 may include an OTA service management service module 1020 and an OTA upgrade package download service module 1021. Usually, the OTA server may indicate the terminal to upgrade a specific control unit. Optionally, the OTA server may alternatively send upgrade data of an ECU to the terminal by using the OTA upgrade package download service module 1021. In some specific implementation scenarios, the OTA server is also referred to as an OTA cloud server or an OTA cloud-side server.

Optionally, the OTA upgrade package download service module 1021 and the OTA service management service module 1020 may be two separate pieces of hardware. To be specific, the OTA upgrade package download service module 1021 may be an independent server, and provide, for the terminal 101, a service for downloading an installation package.

The terminal 101 is a terminal on which a control unit is deployed, for example, a vehicle. The terminal 101 may obtain the upgrade data by using the OTA server 102, to upgrade the control unit.

The control unit in embodiments of this application may include all units to which OTA upgrade is applicable in the terminal, for example, an ECU. An ECU is used as an example for description in the following embodiments.

Optionally, the terminal 101 may include an OTA device-side upgrade management unit 1010, an OTA device-side ECU upgrade package management module 1011, and an OTA device-side ECU upgrade management unit 1012. The OTA device-side upgrade management unit 1010 may interact with the OTA service management service module 1020, obtain upgrade information from the OTA service management service module 1020 based on software information that is of each ECU in the terminal 101 and that is collected by the OTA device-side ECU upgrade management unit 1012, and then trigger the OTA device-side ECU upgrade package management module 1011 to download an installation package. The OTA device-side ECU upgrade package management module 1011 may interact with the OTA upgrade package download service module 1021, to download and manage the installation package. The OTA device-side ECU upgrade management unit 1012 is responsible for specific ECU upgrade (rollback) processing.

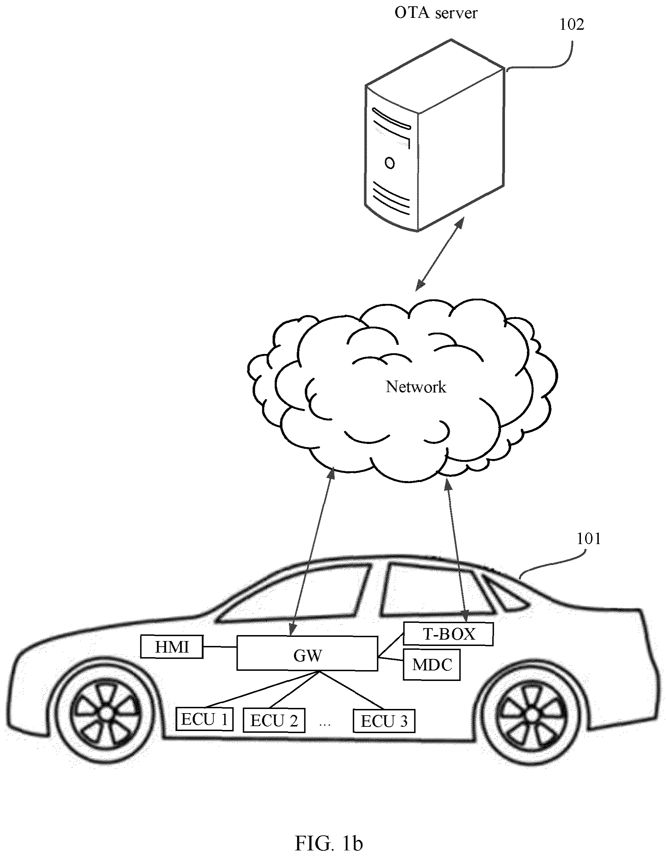

In some specific implementation scenarios, FIG. 1b is a diagram of a system architecture for OTA upgrade according to another embodiment of this application. For example, the terminal 101 is a vehicle. The vehicle may be a vehicle electrical/electronic architecture (Electrical/Electronic Architecture, E/E)-based vehicle. The vehicle may include the following components: a mobile data center (Mobile Data Center, MDC), human machine interaction (Human Machine Interaction, HMI), a device-side upgrade management unit gateway (gateway, GW), a telematics box (Telematics BOX, T-BOX), an electronic control unit (Electronic Control Unit, ECU), and another module. The GW is a core component in an electrical/electronic architecture of the vehicle. As a data exchange hub of a vehicle network, the GW may route network data of a controller area network (Controller Area Network, CAN), a local interconnect network (Local Interconnect Network, LIN), media oriented system transport (Media Oriented System Transport, MOST), and the like in different networks. The OTA device-side ECU upgrade package management module 1011 and the OTA device-side ECU upgrade management unit MDC are intelligent vehicle-mounted computing platforms of the vehicle. The T-BOX is configured to communicate with an exterior of the vehicle, a background system, and an application (application, APP) in a mobile phone. The HMI is an information entertainment system of the vehicle. The ECU may be a vehicle-specific microcomputer controller.

For example, the OTA device-side upgrade management unit 1010, the OTA device-side ECU upgrade package management module 1011, and the OTA device-side ECU upgrade management unit 1012 in the terminal 101 may be units in the MDC. The OTA device-side upgrade management unit 1010 may specifically establish a connection to the OTA service management service module 1020 by using the T-BOX. The OTA device-side ECU upgrade package management module 1011 may also specifically establish a connection to the OTA upgrade package download service module 1021 by using the T-BOX.

There is usually only one OTA device-side upgrade management unit 1010 in the terminal 101, and the OTA device-side upgrade management unit 1010 may be deployed in the T-BOX or the gateway. The OTA device-side ECU upgrade package management module 1011 may be independently deployed in the terminal 101. Optionally, function-related ECUs in the terminal 101 may be integrated, and then managed by jointly deploying the OTA device-side ECU upgrade package management module 1011 and the OTA device-side ECU upgrade management unit 1012. The OTA device-side ECU upgrade package management module 1011 and the OTA device-side ECU upgrade management unit 1012 are interconnected by using the GW.

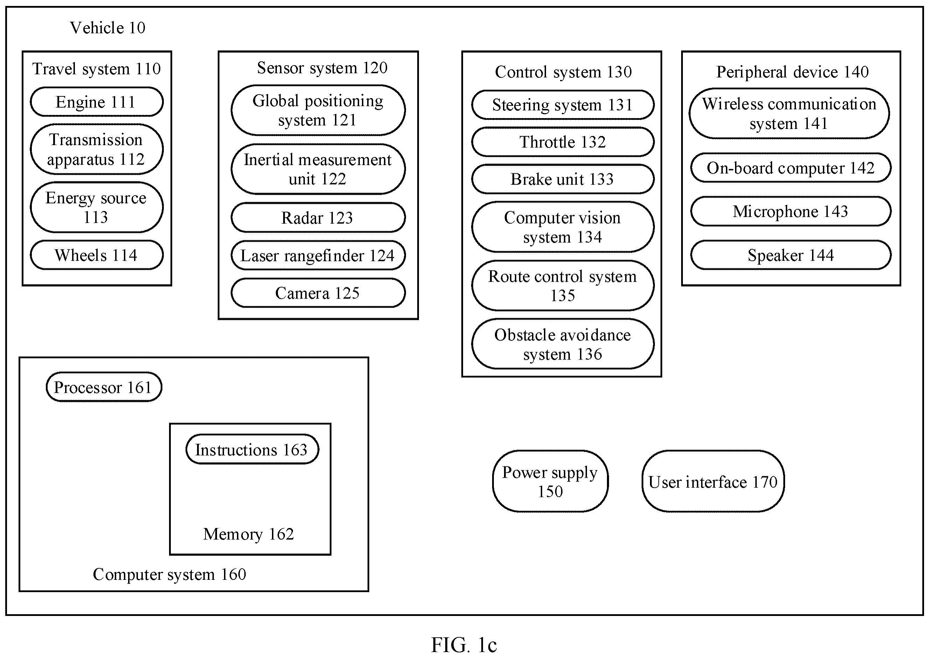

FIG. 1c is a functional block diagram of a vehicle 10 according to an embodiment of this application. The vehicle 10 may include various subsystems such as a travel system 110, a sensor system 120, a control system 130, one or more peripheral devices 140, a power supply 150, a computer system 160, and a user interface 170. Optionally, the vehicle 10 may include more or fewer subsystems, and each subsystem may include a plurality of components. In addition, all the subsystems and components of the vehicle 10 may be interconnected in a wired or wireless manner.

The travel system 110 may include a component that provides power for the vehicle 10 to move. In an embodiment, the travel system 110 may include an engine 111, a transmission apparatus 112, an energy source 113, and wheels 114. The engine 111 may be an internal combustion engine, a motor, an air compression engine, or a combination of other types of engines, for example, a hybrid engine including a gasoline engine and a motor, or a hybrid engine including an internal combustion engine and an air compression engine. The engine 111 converts the energy source 113 into mechanical energy. Examples of energy sources 113 include gasoline, diesel, other petroleum-based fuels, propane, other compressed gas-based fuels, anhydrous alcohol, solar panels, batteries, and other power sources. The energy source 113 may also provide energy for another system of the vehicle 10. The transmission apparatus 112 may transmit mechanical power from the engine 111 to the wheels 114. The transmission apparatus 112 may include a gearbox, a differential, and a drive shaft. In an embodiment, the transmission apparatus 112 may further include another component, for example, a clutch. The drive shaft may include one or more shafts that may be coupled to one or more wheels 114.

The sensor system 120 may include several sensors that sense information about an ambient environment of the vehicle 10. For example, the sensor system 120 may include a global positioning system 121 (the positioning system may be the GPS system, BeiDou system, or another positioning system), an inertial measurement unit (Inertial Measurement Unit, IMU) 122, a radar 123, a laser rangefinder 124, and a camera 125. The sensor system 120 may further include sensors (for example, an in-vehicle air quality monitor, a fuel gauge, and an oil temperature gauge) of an internal system of the vehicle 10 that is monitored. Sensor data from one or more of these sensors can be used to detect an object and corresponding features (a location, a shape, a direction, a speed, and the like) of the object. Such detection and identification are key functions for a safe operation of the vehicle 10. The global positioning system 121 may be configured to estimate a geographical location of the vehicle 10. The IMU 122 is configured to sense a location and a head orientation change of the vehicle 10 based on an inertial acceleration. In an embodiment, the IMU 122 may be a combination of an accelerometer and a gyroscope. The radar 123 may sense an object in the ambient environment of the vehicle 10 by using a radio signal. In some embodiments, in addition to sensing the object, the radar 123 may be further configured to sense a speed and/or an advancing direction of the object. The laser rangefinder 124 may sense, by using a laser, an object in an environment of the vehicle 10. In some embodiments, the laser rangefinder 124 may include one or more laser sources, a laser scanner, one or more detectors, and another system component. The camera 125 may be configured to capture a plurality of images of the ambient environment of the vehicle 10. The camera 125 may be a static camera or a video camera.

The control system 130 controls operations of the vehicle 10 and components of the vehicle 10. The control system 130 may include various components: a steering system 131, a throttle 132, a brake unit 133, a computer vision system 134, a route control system 135, and an obstacle avoidance system 136. The steering system 131 may be operated to adjust an advancing direction of the vehicle 10. For example, in an embodiment, the steering system 131 may be a steering wheel system. The throttle 132 is configured to control an operating speed of the engine 111 and further control a speed of the vehicle 10. The brake unit 133 is configured to control the vehicle 10 to decelerate. The brake unit 133 may use friction to slow down the wheels 114. In another embodiment, the brake unit 133 may convert kinetic energy of the wheel 114 into a current. The brake unit 133 may alternatively reduce a rotational speed of the wheel 114 in another form to control the speed of the vehicle 10. The computer vision system 134 may be operated to process and analyze an image captured by the camera 125, to identify an object and/or a feature in the ambient environment of the vehicle 10. The object and/or the feature may include a traffic signal, a road boundary, and an obstacle. The computer vision system 134 may use an object identification algorithm, a structure from motion (Structure from Motion, SFM) algorithm, video tracking, and another computer vision technology. In some embodiments, the computer vision system 134 may be configured to draw a map for an environment, track an object, estimate a speed of the object, and the like. The route control system 135 is configured to determine a driving route of the vehicle 10. In some embodiments, the route control system 135 may determine the driving route of the vehicle 10 with reference to data from the sensor system 120 and one or more predetermined maps. The obstacle avoidance system 136 is configured to identify, evaluate, and avoid or otherwise to bypass a potential obstacle in the environment of the vehicle 10.

Certainly, in an example, the control system 130 may add or alternatively include components in addition to those shown and described, or may delete some of the components shown above.

The control unit in embodiments of this application may be one or more control units in the control system 130. The control unit usually controls the vehicle by using an application or program instructions. An original equipment manufacturer upgrades the application in the control unit based on an actual situation, and provides an OTA upgrade service for a user.

The vehicle 10 interacts with an external sensor, another vehicle, another computer system, or the user by using the peripheral device 140. The peripheral device 140 may include a wireless communication system 141, an on-board computer 142, a microphone 143, and/or a speaker 144.

In some embodiments, the peripheral device 140 provides a means for the user of the vehicle 10 to interact with the user interface 170. For example, the on-board computer 142 may provide information for the user of the vehicle 10. The user interface 170 may further operate the on-board computer 142 to receive an input from the user. The on-board computer 142 may perform an operation on a touchscreen. In another case, the peripheral device 140 may provide a means for the vehicle 10 to communicate with another device located in the vehicle. For example, the microphone 143 may receive an audio (for example, a voice command or another audio input) from the user of the vehicle 10. Likewise, the speaker 144 may output an audio to the user of the vehicle 10. The wireless communication system 141 may perform wireless communication with one or more devices directly or through a communication network. For example, the wireless communication system 141 may use 3G cellular communication, for example, code division multiple access (Code Division Multiple Access, CDMA), evolution-data optimized (Evolution-Data Optimized, EV-DO), global system for mobile communications (Global System for Mobile Communications, GSM)/general packet radio service (General packet radio service, GPRS), or a 4th generation mobile network (4th generation mobile network, 4G) cellular communication, for example, long term evolution (Long Term Evolution, LTE), or a 5th generation mobile network (5th generation mobile network, 5th generation wireless system, or 5th-Generation, 5G) cellular communication. The wireless communication system 141 may communicate with a wireless local area network (wireless local area network, WLAN) by using Wi-Fi. In some embodiments, the wireless communication system 141 may directly communicate with a device by using an infrared link, Bluetooth, or ZigBee. Other wireless protocols such as various vehicle communication systems may be used. For example, the wireless communication system 141 may include one or more dedicated short range communications (Dedicated Short Range Communications, DSRC) devices, and these devices may include public and/or private data communication between vehicles and/or roadside stations.

The power supply 150 may supply power to various components of the vehicle 10. In an embodiment, the power supply 150 may be a rechargeable lithium-ion or lead-acid battery. One or more battery packs of such a battery may be configured as the power supply to supply power to the components of the vehicle 10. In some embodiments, the power supply 150 and the energy source 113 may be implemented together, for example, in some pure electric vehicles.

Some or all of functions of the vehicle 10 are controlled by the computer system 160. The computer system 160 may include at least one processor 161. The processor 161 executes instructions 163 stored in a non-transitory computer-readable medium, for example, a memory 162. The computer system 160 may alternatively be a plurality of computing devices that control an individual component or a subsystem of the vehicle 10 in a distributed manner.

The processor 161 may be any conventional processor, for example, a commercially available central processing unit (Central Processing Unit, CPU). Alternatively, the processor may be a dedicated device like an application-specific integrated circuit (Application-Specific Integrated Circuit, ASIC) or another hardware-based processor. Although FIG. 1c functionally illustrates the processor, the memory, and other components of the computer system 160 in a same block, a person of ordinary skill in the art should understand that the processor, the computer system, or the memory may actually include a plurality of processors, computers, or memories that may or may not be stored in a same physical housing. For example, the memory may be a hard disk drive or another storage medium located in a housing different from that of the computer system 160. Therefore, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and perform wireless communication with the vehicle. In another aspect, some processes described herein are performed on a processor disposed inside the vehicle, while others are performed by a remote processor, including performing steps necessary for a single operation.

In some embodiments, the memory 162 may include the instructions 163 (for example, program logic). The instructions 163 may be executed by the processor 161 to perform various functions of the vehicle 10, including the functions described above. The memory 162 may also include additional instructions, including instructions used to send data to, receive data from, interact with, and/or control one or more of the travel system 110, the sensor system 120, the control system 130, and the peripheral device 140.

In addition to the instructions 163, the memory 162 may further store data, for example, an installation package of software, a target file, and other information. The information may be used by the vehicle 10 and the computer system 160 when software is installed on the vehicle 10 or a target function is implemented.

The user interface 170 is configured to provide information for or receive information from the user of the vehicle 10. Optionally, the user interface 170 may include one or more input/output devices in a set of peripheral devices 140, for example, the wireless communication system 141, the on-board computer 142, the microphone 143, and the speaker 144.

The computer system 160 may control the functions of the vehicle 10 based on inputs received from various subsystems (for example, the travel system 110, the sensor system 120, and the control system 130) and from the user interface 170. For example, the computer system 160 may generate a target request by using target service information from an external device. In some embodiments, the computer system 160 may be operated to provide control over many aspects of the vehicle 10 and the subsystems of the vehicle 10.

Optionally, one or more of the components may be installed separately from or associated with the vehicle 10. For example, the memory 162 may be partially or completely separated from the vehicle 10. The foregoing components may be communicatively coupled together in a wired and/or wireless manner.

Optionally, the foregoing components are merely examples. During actual application, components in the foregoing modules may be added or deleted based on an actual requirement. FIG. 1c shall not be construed as a limitation on embodiments of this application.

The vehicle 10 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

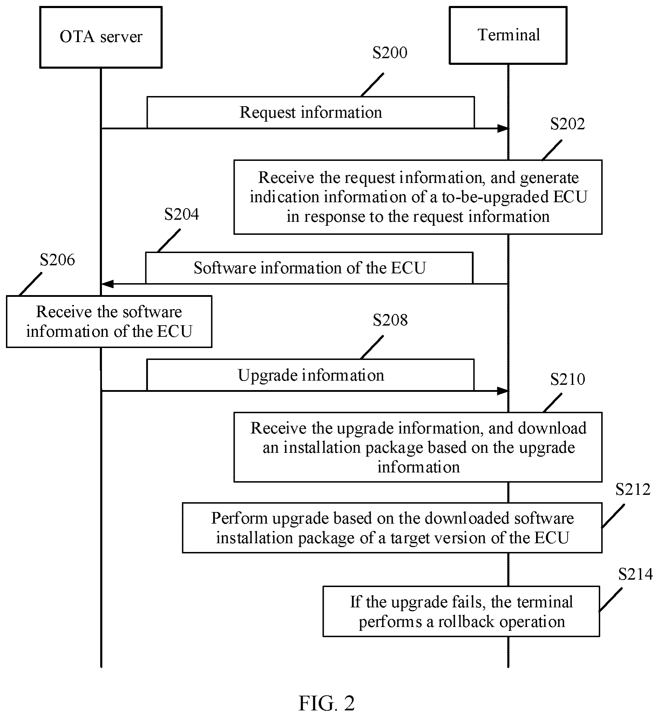

In an existing OTA upgrade process for a control unit, to restore a version status before upgrade when upgrade fails, some terminals use an A/B partition upgrade and backup solution. However, use of the A/B partition upgrade and backup solution leads to higher costs of an ECU. Therefore, many ECUs do not have a capability of A/B partition upgrade and backup. How to implement OTA upgrade for a terminal that does not have the capability of A/B partition upgrade and backup and how to resolve a rollback processing problem caused by OTA upgrade failure when some ECUs in the vehicle support A/B partition upgrade and backup while other ECUs do not support the A/B partition upgrade and backup are urgent technical problems to be resolved by a person skilled in the art. The following describes an OTA upgrade method provided in an embodiment of this application with reference to FIG. 2.

FIG. 2 is a schematic flowchart of an OTA upgrade method according to an embodiment of this application. In this embodiment, an example in which a control unit is an ECU is used for description. The method includes the following steps.

Step S200: An OTA server sends request information to a terminal.

Specifically, the request information is used to request to obtain software information of an ECU on the terminal. The OTA server may periodically send the request information to the terminal, or may send the request information when a software version of the ECU is updated.

For example, the OTA server may send the request information to the OTA device-side upgrade management unit in the terminal by using the OTA service management service module.

It may be understood that the terminal may include a plurality of ECUs. According to the OTA upgrade method in this embodiment of this application, OTA upgrade may be synchronously or asynchronously performed on the plurality of ECUs. For ease of description, an example in which the ECU is a single to-be-upgraded ECU is used for description below.

Step S202: The terminal receives the request information, and generates indication information of the to-be-upgraded ECU in response to the request information.

Specifically, in response to the request information, the terminal may collect current version information of the ECU, then detect, based on the current version information, whether the terminal stores a backup installation package of a current software version of the ECU, and generate the indication information based on a detection result.

Optionally, in response to the request information, the terminal may first determine whether the ECU supports A/B partition upgrade and backup. If the ECU supports the A/B partition upgrade and backup, the terminal may directly generate indication information indicating that there is a corresponding rollback package. If the ECU does not support the A/B partition upgrade and backup, the terminal may further collect the current version information of the ECU, then detect, based on the current version information, whether the terminal stores the backup installation package of the current software version of the ECU, and generate the indication information based on the detection result.

The generating the indication information based on the detection result may be specifically: if it is detected that the terminal stores the backup installation package of the current software version of the ECU, generating the indication information indicating that there is the corresponding rollback package; or if it is detected that the terminal does not store the backup installation package of the current software version of the ECU, generating indication information indicating that there is no corresponding rollback package.

For example, the indication information may be a negotiated specific identifier. For example, an identifier "00" represents the indication information indicating that there is no corresponding rollback package, and an identifier "01" represents the indication information indicating that there is the corresponding rollback package.

For example, the OTA device-side upgrade management unit in the terminal may collect the current version information of the ECU by using the OTA device-side ECU upgrade management unit, and then generate the indication information of the to-be-upgraded ECU based on the collected current version information.

It should be noted that, in this embodiment of this application, that the terminal generates the indication information of the to-be-upgraded ECU is not limited to being triggered by using step S200 in which the OTA server sends the request information to the terminal, or being triggered in another form. For example, the terminal generates the indication information of the to-be-upgraded ECU based on a preset time period, or generates the indication information of the to-be-upgraded ECU based on a preset time node.

Step S204: The terminal sends the software information of the ECU to the OTA server.

Specifically, after generating the indication information of the to-be-upgraded ECU, the terminal may assemble the software information of the ECU. The software information generated through assembly may include information about the current software version of the ECU and the indication information. For example, the assembling the software information of the ECU may be specifically: assembling a software information tree for the information about the current software version of the ECU and the indication information.

The software tree may include a node branch that is stacked layer by layer. Specifically, the software tree may be assembled by integrating same or similar ECUs into modules based on functions and then associating the modules with the terminal (for example, a vehicle). To be specific, software may include a plurality of modules. Each module corresponds to a node in the software tree. In other words, each module included in the software can find a corresponding node in the software tree. The software information tree may include information about a current software version and indication information that correspond to each of a plurality of ECUs. The information about the current software versions and the indication information that correspond to different ECUs may exist in nodes at a same layer or different layers.

For example, after completing assembly of the software information of the ECU by using the OTA device-side upgrade management unit, the terminal returns, by using the OTA device-side upgrade management unit, the software information of the ECU to the OTA service management service module in the OTA server.

Step S206: The OTA server receives the software information of the ECU.

For example, the OTA server may receive, by using the OTA service management service module, the software information of the ECU returned by the OTA device-side upgrade management unit in the terminal.

Step S208: The OTA server sends upgrade information to the terminal based on the software information of the ECU.

Specifically, the OTA server may parse the software information of the ECU to obtain the current version information of the to-be-upgraded ECU and the indication information. Then, the OTA server determines or selects a software installation package (which is equivalent to a software installation package upgraded to the target version) of a corresponding target version based on the current version information of the to-be-upgraded ECU, obtains software installation package download information of the target version, and determines, based on the indication information, whether to provide the terminal with installation package download information corresponding to the current version information of the to-be-upgraded ECU. After the software installation package download information (or including the installation package download information corresponding to the current version information) of the target version is encapsulated into the upgrade information, the upgrade information is sent to the terminal. For example, the current version is V1.0, and the target version is V1.5.

The OTA server parses the indication information, to learn whether the terminal stores the rollback package corresponding to the current software version of the ECU. For example, if the indication information is a specific identifier, for example, the foregoing identifier "00" or "01". In this case, after obtaining a value of the identifier through parsing, the OTA server learns whether the terminal stores the rollback package corresponding to the current software version of the ECU. If the indication information indicates that there is no corresponding rollback package for the current software version of the ECU on the terminal side, the encapsulated upgrade information includes the installation package download information corresponding to the current version information. If the indication information indicates that there is the corresponding rollback package for the current software version of the ECU on the terminal side, the encapsulated upgrade information is the software installation package download information of the target version, and does not include the installation package download information corresponding to the current version information.

The software installation package download information of the target version may be specifically address information for downloading the software installation package of the target version. The installation package download information corresponding to the current version information of the to-be-upgraded ECU may be specifically address information for downloading an installation package corresponding to the current version information of the to-be-upgraded ECU.

For example, the OTA server may parse the software information of the ECU by using the OTA service management service module. After determining or selecting the corresponding software installation package of the target version, the OTA service management service module may upload the software installation package of the target version to the OTA upgrade package download service module, and obtain the address information of the software installation package that is of the target version and that is stored in the OTA upgrade package download service module. When the OTA service management service module determines, based on the indication information, to provide the terminal with the installation package download information corresponding to the current version information of the to-be-upgraded ECU, the OTA service management service module may also upload the installation package corresponding to the current version information to the OTA upgrade package download service module, and obtain the address information of the installation package that corresponds to the current version information and that is stored in the OTA upgrade package download service module. Then, after encapsulating the software installation package download information (or including the installation package download information corresponding to the current version information) of the target version into the upgrade information, the OTA service management service module sends the upgrade information to the terminal.

Step S210: The terminal receives the upgrade information, and downloads the installation package based on the upgrade information.

Specifically, if the upgrade information includes the software installation package download information of the current version of the ECU and the software installation package download information of the target version of the ECU. To be specific, the ECU does not support the A/B partition upgrade and backup, and the terminal does not locally store the backup installation package of the current software version of the ECU as the rollback package. In this case, the terminal respectively downloads the backup installation package of the current software version of the ECU and the software installation package of the target version of the ECU based on the software installation package download information of the current version of the ECU and the software installation package download information of the target version of the ECU.

If the upgrade information is the software installation package download information of the target version of the ECU, that is, when the ECU supports the A/B partition upgrade and backup, or the ECU does not support the A/B partition upgrade and backup, the terminal locally stores the backup installation package of the current software version of the ECU as the rollback package. In this case, the terminal only needs to download the software installation package of the target version of the ECU based on the software installation package download information of the target version of the ECU.

For example, after receiving the upgrade information by using the OTA device-side upgrade management unit, the terminal may trigger, based on the upgrade information, the OTA device-side ECU upgrade package management module to download the installation package.

Step S212: The terminal performs upgrade based on the downloaded software installation package of the target version of the ECU.

Specifically, if the ECU supports the A/B partition upgrade and backup, the terminal may directly perform upgrade installation in a backup partition based on the downloaded software installation package of the target version of the ECU. If the ECU does not support the A/B partition upgrade and backup, the terminal may upgrade the ECU in a currently running system environment based on the downloaded software installation package of the target version of the ECU.

For example, the terminal may trigger, by using the OTA device-side upgrade management unit, the OTA device-side ECU upgrade management unit to upgrade the to-be-upgraded ECU based on the downloaded software installation package of the target version of the ECU. After completing the upgrade, the OTA device-side ECU upgrade management unit may return upgrade completion information to the OTA device-side upgrade management unit. The OTA device-side upgrade management unit may query an upgrade result from the OTA device-side ECU upgrade management unit.

When the upgrade result is that the upgrade succeeds, if the ECU supports the A/B partition upgrade and backup, the terminal may directly delete the software installation package of the target version of the ECU, and switch to the backup partition. In this case, an original partition in use becomes a new backup partition. Alternatively, if the ECU does not support the A/B partition upgrade and backup, the terminal may delete the software installation package of the current version of the ECU, and store the software installation package of the target version of the ECU as a rollback package.

If the upgrade result is that the upgrade fails, step S214 may be performed.

Step S214: If the upgrade fails, the terminal performs a rollback operation.

Specifically, if the ECU supports the A/B partition upgrade and backup, the terminal restores a partition in which the upgrade fails to a mirror backup partition. To be specific, the terminal may mirror and back up data in a partition in use to the partition in which the upgrade fails, continue to use the partition in current use, and delete the downloaded software installation package of the target version of the ECU. In other words, after the upgrade fails in the backup partition, the terminal does not switch to the mirror backup partition, and continues to mirror and back up the data in the partition in use to the backup partition.

If the ECU does not support the A/B partition upgrade and backup, the terminal may perform the rollback operation based on the stored software installation package of the current version of the ECU (where the software installation package is always stored in the terminal, or is stored after being downloaded by using step S210), and then delete the software installation package of the target version of the ECU.

In this embodiment of this application, when the terminal interacts with the OTA server, regardless of whether the to-be-upgraded ECU supports the A/B partition upgrade and backup, the indication information indicating whether there is the corresponding rollback package for the current software version of the ECU is sent to the OTA server, so that the OTA server identifies whether to deliver installation package download information used for a rollback, to implement on-demand delivery of the rollback package and effectively reduce traffic consumption. In addition, when both the ECU that supports the A/B partition upgrade and backup and the ECU that does not support the A/B partition upgrade and backup exist on the terminal, an upgrade rollback procedure can be simplified and unified, and the ECU that does not support the A/B partition upgrade and backup does not need to be reconstructed. Especially in a scenario in which the terminal (for example, a vehicle) replaces a component, regardless of whether the newly replaced component supports the A/B partition upgrade and backup, a rollback capability in an OTA upgrade process can be automatically compatible, so that costs are reduced.

In another possible implementation, before the performing upgrade based on the software installation package of the target version of the ECU, the method may further include: The terminal receives a first key sent by a first server; and decrypts the software installation package of the target version of the ECU based on the first key. The software installation package of the target version of the ECU is generated after the first server encrypts upgrade data of the ECU based on a second key. The first key is a decryption key corresponding to the second key.

An existing OTA upgrade model is dominated by an original equipment manufacturer (Original Equipment Manufacturer, OEM). The OEM is responsible for reviewing a software version of an upgrade package and distributing the upgrade package. However, with development of intelligent connected vehicles, when some sensitive components and special applications need to be upgraded, if an upgrade package is submitted to the OEM for review and then downloaded by using the OTA server, a core technology of a component supplier may be leaked, or related data may be exposed.

The first server in this embodiment of this application may be the component supplier of the terminal. Specifically, the first server may encrypt the upgrade data by using the second key to obtain the software installation package (namely, the upgrade package) of the target version, and then upload the software installation package to the OTA server. To be specific, the software installation package of the target version of the ECU is encrypted by the first server, and after downloading the software installation package of the target version, the terminal may decrypt the software installation package by using a corresponding decryption key (the first key). This can prevent the core technology of the component supplier from being leaked or related data from being obtained by the OTA server, and prevent an attacker from tampering with the upgrade data, so that security of OTA upgrade is improved.

It should be noted that the first server in this embodiment of this application may be a server cluster in which a plurality of servers are deployed by using a distributed architecture. The cluster may include one or more of a cloud computing server, a content delivery network (Content Delivery Network, CDN) server, a network time protocol (Network Time Protocol, NTP), a domain name system (Domain Name System, DNS) server, and the like.

The second key may be a symmetric key or an asymmetric key. Specifically, when a ciphertext is obtained through encryption by using an asymmetric encryption algorithm, an encryption key is usually different from a decryption key. When a ciphertext is obtained through encryption by using a symmetric encryption algorithm, an encryption key is the same as a decryption key.

In another possible implementation, that the terminal receives a first key sent by a first server includes:
The terminal establishes a secure channel with the first server; and
the terminal receives, through the secure channel, the first key sent by the first server.

The secure channel may be a transmission channel based on a secure sockets layer (Secure Sockets Layer, SSL) protocol or a transport layer security (Transport Layer Security, TLS) protocol, and is used for secure transmission of data. Because the secure channel is a secure and trusted channel, the first server transmits the first key to the terminal through the secure channel. This can ensure security of the first key.

The foregoing describes in detail the method in embodiments of this application, and the following provides a related apparatus in embodiments of this application.

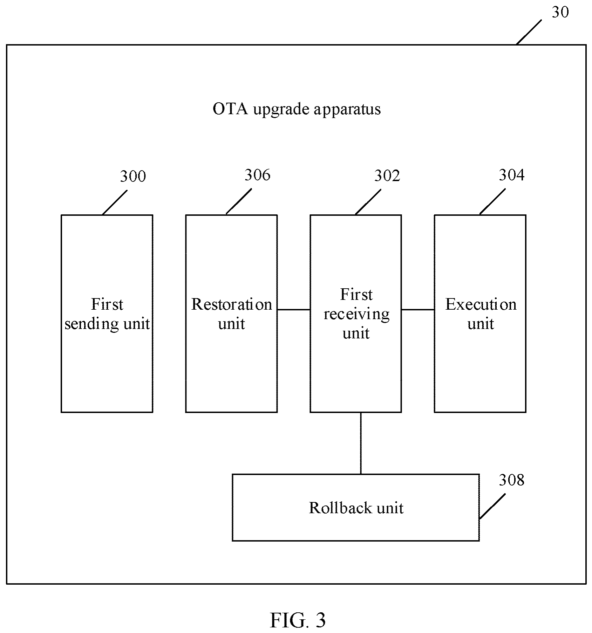

FIG. 3 is a schematic diagram of a structure of an OTA upgrade apparatus according to an embodiment of this application. The OTA upgrade apparatus 30 corresponds to the terminal in the foregoing method embodiment, and may include a first sending unit 300, a first receiving unit 302, and an execution unit 304.

The first sending unit 300 is configured to send software information of a control unit to an OTA serve. The software information includes information about a current software version of the control unit and indication information, and the indication information indicates whether there is a corresponding rollback package for the current software version of the control unit.

The first receiving unit 302 is configured to receive upgrade information sent by the OTA server. If there is no corresponding rollback package for the current software version of the control unit, the upgrade information includes software installation package download information of the current version and software installation package download information of a target version that are of the control unit; or if there is the corresponding rollback package for the current software version of the control unit, the upgrade information is software installation package download information of a target version.

The execution unit 304 is configured to perform a first operation on the control unit based on the upgrade information.

In a possible implementation, the control unit includes a control unit that supports A/B partition upgrade and backup or a control unit that does not support A/B partition upgrade and backup.

In a possible implementation, if the control unit supports A/B partition upgrade and backup, the indication information indicates that there is the corresponding rollback package for the current software version of the control unit; or
when the control unit does not support A/B partition upgrade and backup, if the apparatus stores a backup installation package of the current software version of the control unit, the indication information indicates that there is the corresponding rollback package for the current software version of the control unit; or when the control unit does not support A/B partition upgrade and backup, if the apparatus does not store a backup installation package of the current software version of the control unit, the indication information indicates that there is no corresponding rollback package for the current software version of the control unit.

In a possible implementation, the execution unit 304 may specifically include:
a first download and upgrade unit, configured to: if the control unit does not support the A/B partition upgrade and backup, when there is the corresponding rollback package for the current software version of the control unit, download a software installation package of the target version based on the software installation package download information of the target version, and perform upgrade installation on the control unit based on the software installation package of the target version; or
a second download and upgrade unit, configured to: when there is no corresponding rollback package for the current software version of the control unit, download a software installation package of the target version based on the software installation package download information of the target version, and download a software installation package of the current version of the control unit based on the software installation package download information of the current version of the control unit; and perform upgrade installation on the control unit based on the software installation package of the target version.

In a possible implementation, the OTA upgrade apparatus 30 may further include a restoration unit 306, configured to: when upgrade fails in a process of the performing upgrade installation on the control unit in a backup partition based on the software installation package of the target version, restore the partition in which the upgrade fails to a mirror backup partition.

In a possible implementation, the OTA upgrade apparatus 30 may further include a rollback unit 308, configured to: when upgrade fails in a process of the performing upgrade installation on the control unit in a backup partition based on the software installation package of the target version, perform a rollback operation based on the software installation package of the current version of the control unit, and delete the software installation package of the target version.

In a possible implementation, the first receiving unit 302 in the OTA upgrade apparatus 30 may be further configured to: before upgrade is performed based on the software installation package of the target version of the ECU, receive a first key sent by a first server; and decrypt the software installation package of the target version of the ECU based on the first key. The software installation package of the target version of the ECU is generated after the first server encrypts upgrade data of the ECU based on a second key. The first key is a decryption key corresponding to the second key.

The OTA upgrade apparatus 30 may further include an establishment unit, configured to establish a secure channel with the first server. Then, the first receiving unit 302 may receive, through the secure channel, the first key sent by the first server.

It should be noted that, for implementations of the units in the OTA upgrade apparatus 30 described in this embodiment of this application, refer to related descriptions of the terminal in the foregoing method embodiment. Details are not described herein again.

It should be understood that the OTA upgrade apparatus 30 may further integrate functions such as an intelligent driving system, a life service system, a security protection system, a location service system, and a vehicle service system by using technologies such as a computer, modern sensing, information fusion, communication, artificial intelligence, and automatic control. This is not specifically limited in this application, and details are not described again.

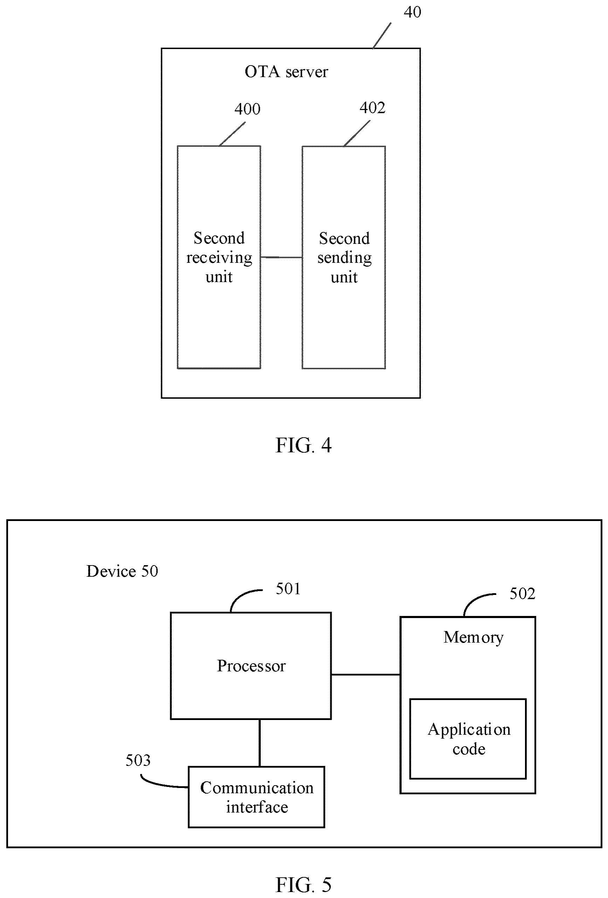

FIG. 4 is a schematic diagram of a structure of an OTA server according to an embodiment of this application. The OTA server 40 corresponds to the OTA server in the foregoing method embodiment, and may include a second receiving unit 400 and a second sending unit 402.

The second receiving unit 400 is configured to receive software information that is of a control unit and that is sent by a terminal. The software information includes information about a current software version of the control unit and indication information, and the indication information indicates whether there is a corresponding rollback package for the current software version of the control unit.

The second sending unit 402 is configured to send upgrade information to the terminal based on the software information. If there is no corresponding rollback package for the current software version of the control unit, the upgrade information includes software installation package download information of the current version and software installation package download information of a target version that are of the control unit; or if there is the corresponding rollback package for the current software version of the control unit, the upgrade information is software installation package download information of a target version.

It should be noted that, for implementations of the units in the OTA server 40 described in this embodiment of this application, refer to related descriptions of the OTA server in the foregoing method embodiment. Details are not described herein again.

FIG. 5 is a schematic diagram of a structure of a device according to an embodiment of this application. Both the terminal and the server in embodiments of this application may be implemented by using the structure in FIG. 5. The device 50 includes at least one processor 501, at least one memory 502, and at least one communication interface 503. In addition, the device may further include a general-purpose component like an antenna. Details are not described herein again.

The processor 501 may be a general-purpose central processing unit (CPU), a microprocessor, an application-specific integrated circuit (application-specific integrated circuit, ASIC), or one or more integrated circuits for controlling program execution in the foregoing solutions.

The communication interface 503 is configured to communicate with another device or a communication network, for example, an OTA server, a key server, or a device inside a vehicle.

The memory 502 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. The memory may exist independently, and is connected to the processor through a bus. The memory may alternatively be integrated with the processor.

The memory 502 is configured to store application code for executing the foregoing solutions, and the processor 501 controls the execution. The processor 501 is configured to execute the application code stored in the memory 502.

When the device 50 shown in FIG. 5 is a terminal, the code stored in the memory 502 may be used to perform processing steps on the terminal side in the OTA upgrade method provided in FIG. 2, including sending software information of a control unit to an OTA server, receiving upgrade information sent by the OTA server, and performing a first operation on the control unit based on the upgrade information.

The control unit includes a control unit that supports A/B partition upgrade and backup or a control unit that does not support A/B partition upgrade and backup.

If the control unit supports A/B partition upgrade and backup, the indication information indicates that there is the corresponding rollback package for the current software version of the control unit; or
when the control unit does not support A/B partition upgrade and backup, if the terminal stores a backup installation package of the current software version of the control unit, the indication information indicates that there is the corresponding rollback package for the current software version of the control unit; or when the control unit does not support A/B partition upgrade and backup, if the terminal does not store a backup installation package of the current software version of the control unit, the indication information indicates that there is no corresponding rollback package for the current software version of the control unit.

That the terminal performs a first operation on the control unit based on the upgrade information includes:
If the control unit supports the A/B partition upgrade and backup, the terminal downloads a software installation package of the target version based on the software installation package download information of the target version, and performs upgrade installation on the control unit in a backup partition based on the software installation package of the target version.

That the terminal performs a first operation on the control unit based on the upgrade information includes:
If the control unit does not support the A/B partition upgrade and backup, when there is the corresponding rollback package for the current software version of the control unit, the terminal downloads a software installation package of the target version based on the software installation package download information of the target version, and performs upgrade installation on the control unit based on the software installation package of the target version; or
when there is no corresponding rollback package for the current software version of the control unit, the terminal downloads a software installation package of the target version based on the software installation package download information of the target version, and downloads a software installation package of the current version of the control unit based on the software installation package download information of the current version of the control unit; and performs upgrade installation on the control unit based on the software installation package of the target version.

In a process of the performing upgrade installation on the control unit in a backup partition based on the software installation package of the target version, upgrade fails, and the method further includes:
The terminal restores the partition in which the upgrade fails to a mirror backup partition.

In a process of the performing upgrade installation on the control unit based on the software installation package of the target version, upgrade fails, and the method further includes:
The terminal performs a rollback operation based on the software installation package of the current version of the control unit, and deletes the software installation package of the target version.

It should be noted that, when the device 50 is the terminal, for an implementation, refer to related descriptions of the terminal in the foregoing method embodiment. Details are not described herein again.

When the device shown in FIG. 5 is an OTA server, the code stored in the memory 502 may be used to perform processing steps on the OTA server side in the OTA upgrade method provided in FIG. 2, including receiving software information that is of a control unit and that is sent by a terminal, and sending upgrade information to the terminal based on the software information.

It should be noted that, when the device 50 is the OTA server, for an implementation, refer to related descriptions of the OTA server in the foregoing method embodiment. Details are not described herein again.

An embodiment of this application further provides a computer-readable storage medium. The computer-readable storage medium stores a computer program. When the computer program is run on one or more processors, the method in the embodiment shown in FIG. 2 is implemented.

An embodiment of this application further provides a computer program or a computer program product. When the computer program product runs on one or more processors, the method in the embodiment shown in FIG. 2 is implemented.

An embodiment of this application further provides a chip system. The chip system includes a communication interface and at least one processor. The communication interface is configured to provide an information input/output for the at least one processor, and/or the communication interface is configured to send or receive data. The processor is configured to invoke a computer program (or computer instructions), to implement processing steps on the terminal side or the OTA server side in the embodiment shown in FIG. 2.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the method in embodiments may be implemented by a computer program instructing related hardware. The program may be stored in a computer-readable storage medium. When the program is run, the procedures in the foregoing method embodiments may be performed. The foregoing storage medium includes any medium that can store program code, for example, a ROM, a random access memory RAM, a magnetic disk, or an optical disc.

## Claims

1. An over-the-air OTA upgrade method, comprising:
sending, by a terminal, software information of a control unit to an OTA server, wherein the software information comprises information about a current software version of the control unit and indication information, and the indication information indicates whether there is a corresponding rollback package for the current software version of the control unit;
if the indication information indicates that there are no corresponding rollback packages for the current software version of the control unit, receiving, by the terminal, first upgrade information sent by the OTA server in response to the indication information; wherein the first upgrade information comprises software installation package download information of the current version and software installation package download information of a target version that are of the control unit; or if the indication information indicates that there is a corresponding rollback package for the current software version of the control unit, receiving, by the terminal, second upgrade information sent by the OTA server in response to the indication information; wherein the second upgrade information comprises software installation package download information of a target version; and
performing, by the terminal, a first operation on the control unit based on the received first upgrade information or the received second upgrade information.

2. The method according to claim 1, wherein the control unit comprises a control unit that supports A/B partition upgrade and backup or a control unit that does not support A/B partition upgrade and backup.

3. The method according to claim 1, wherein if the control unit supports A/B partition upgrade and backup, the indication information indicates that there is the corresponding rollback package for the current software version of the control unit; or
when the control unit does not support A/B partition upgrade and backup, if the terminal stores a backup installation package of the current software version of the control unit, the indication information indicates that there is the corresponding rollback package for the current software version of the control unit; or when the control unit does not support A/B partition upgrade and backup, if the terminal does not store a backup installation package of the current software version of the control unit, the indication information indicates that there is no corresponding rollback package for the current software version of the control unit.

4. The method according to any one of claims 1 to 3, wherein the performing, by the terminal, a first operation on the control unit comprises:
if the control unit supports the A/B partition upgrade and backup, downloading, by the terminal, a software installation package of the target version based on the software installation package download information of the target version, and performing upgrade installation on the control unit in a backup partition based on the software installation package of the target version.

5. The method according to any one of claims 1 to 3, wherein the performing, by the terminal, a first operation on the control unit comprises:
if the control unit does not support the A/B partition upgrade and backup, when there is the corresponding rollback package for the current software version of the control unit, downloading, by the terminal, a software installation package of the target version based on the software installation package download information of the target version, and performing upgrade installation on the control unit based on the software installation package of the target version; or
when there is no corresponding rollback package for the current software version of the control unit, downloading, by the terminal, a software installation package of the target version based on the software installation package download information of the target version, and downloading a software installation package of the current version of the control unit based on the software installation package download information of the current version of the control unit; and performing upgrade installation on the control unit based on the software installation package of the target version.

6. The method according to claim 4, wherein in a process of the performing upgrade installation on the control unit in a backup partition based on the software installation package of the target version, upgrade fails, and the method further comprises:
restoring, by the terminal, the partition in which the upgrade fails to a mirror backup partition.

7. The method according to claim 5, wherein in a process of the performing upgrade installation on the control unit based on the software installation package of the target version, upgrade fails, and the method further comprises:
performing, by the terminal, a rollback operation based on the software installation package of the current version of the control unit, and deleting the software installation package of the target version.

8. The method according to claim 4, wherein the method further comprises:
if the upgrade succeeds, deleting, by the terminal, the software installation package of the current version of the control unit, and storing the software installation package of the target version of the control unit as a rollback package.

9. The method according to any one of claims 6 to 8, wherein before the terminal performs upgrade installation based on the software installation package of the target version of the control unit, the method further comprises:
receiving, by the terminal, a first key sent by a first server; and decrypting the software installation package of the target version of the control unit based on the first key, wherein the software installation package of the target version of the control unit is generated after the first server encrypts upgrade data of the control unit based on a second key, and the first key is a decryption key corresponding to the second key.

10. An over-the-air OTA upgrade apparatus, wherein the apparatus comprises:
a first sending unit, configured to send software information of a control unit to an OTA server, wherein the software information comprises information about a current software version of the control unit and indication information, and the indication information indicates whether there is a corresponding rollback package for the current software version of the control unit;
a first receiving unit, configured to
receive first upgrade information sent by the OTA server in response to the indication information, wherein if the indication information indicates that there are no corresponding rollback packages for the current software version of the control unit, the first upgrade information comprises software installation package download information of the current version and software installation package download information of a target version that are of the control unit; or
receive second upgrade information sent by the OTA server in response to the indication information; wherein if the indication information indicates that there is a corresponding rollback package for the current software version of the control unit, the second upgrade information comprises software installation package download information of a target version; and
an execution unit, configured to perform a first operation on the control unit based on the received first upgrade information or the received second upgrade information.

11. The apparatus according to claim 10, wherein the control unit comprises a control unit that supports A/B partition upgrade and backup or a control unit that does not support A/B partition upgrade and backup.

12. The apparatus according to claim 11, wherein if the control unit supports A/B partition upgrade and backup, the indication information indicates that there is the corresponding rollback package for the current software version of the control unit; or
when the control unit does not support A/B partition upgrade and backup, if the apparatus stores a backup installation package of the current software version of the control unit, the indication information indicates that there is the corresponding rollback package for the current software version of the control unit; or when the control unit does not support A/B partition upgrade and backup, if the apparatus does not store a backup installation package of the current software version of the control unit, the indication information indicates that there is no corresponding rollback package for the current software version of the control unit.

13. The apparatus according to any one of claims 10 to 12, wherein the execution unit further comprises:
a first download and upgrade unit, configured to: if the control unit does not support the A/B partition upgrade and backup, when there is the corresponding rollback package for the current software version of the control unit, download a software installation package of the target version based on the software installation package download information of the target version, and perform upgrade installation on the control unit based on the software installation package of the target version; or
a second download and upgrade unit, configured to: when there is no corresponding rollback package for the current software version of the control unit, download a software installation package of the target version based on the software installation package download information of the target version, and download a software installation package of the current version of the control unit based on the software installation package download information of the current version of the control unit; and perform upgrade installation on the control unit based on the software installation package of the target version.

14. The apparatus according to claim 12, wherein the apparatus further comprises:
a restoration unit, configured to: when upgrade fails in a process of a performing upgrade installation on the control unit in a backup partition based on the software installation package of the target version, restore the partition in which the upgrade fails to a mirror backup partition.

15. A vehicle, comprising a terminal, wherein the terminal comprises the apparatus according to any one of claims 10 to 14.
